# FASCICULE DE BREVET EUROPEEN

(11) **EP 0 617 105 B1**
(45) Date de publication et mention de la délivrance du brevet: **23.12.1998**
(21) Numéro de dépôt: 94870051.3
(22) Date de dépôt: 23.03.1994
(51) Int. Cl.: C09J 195/00, C09J 153/02

(54) **Compositions bitumineuses auto-adhésives à froid**
Bituminöses, in der Kälte selbstklebendes Mittel
Bituminous self-adhesive when cold compositions

(30) Priorité: 24.03.1993 BE 9300289
(43) Date de publication de la demande: 28.09.1994
(73) Titulaire: FINA RESEARCH S.A., B-7181 Seneffe (Feluy) (BE)
(72) Inventeur: Drieskens, Bruno, B-1060 Bruxelles (BE); Haveaux, Bernard, B-1400 Nivelles (BE)

(56) Documents cités:
- EP-A- 0 009 209
- EP-A- 0 317 025

## Description

La présente invention se rapporte à des compositions de bitume modifié avec des polymères auto-adhésives à froid et généralement utilisées pour la fabrication de panneaux d'étanchéité. Plus particulièrement, la présente invention concerne des compositions bitumineuses auto-adhésives à froid ayant des propriétés améliorées notamment pour le collant rapide, la résistance au pelage et la température bille et anneau (TBA).
En particulier, la présente invention se rapporte à des panneaux d'étanchéité constitués d'au moins une couche de la composition bitumineuse de l'invention comprenant des bitumes, des polymères, des charges minérales, et le cas échéant d'autres couches de bitume ou de bitume modifié. Les compositions bitumineuses utilisées peuvent également comprendre des fibres minérales ou synthétiques et des agents thixotropiques comme la silice.
Il est bien connu d'utiliser des compositions bitumineuses pour fabriquer des panneaux d'étanchéité destinés généralement au recouvrement de toiture. Les systèmes traditionnels pour fixer ces panneaux consistent à travailler avec du bitume chaud ou par soudage à la flamme. Il est évident que ce type de technique est dangereux vu le risque d'incendie créé par l'utilisation de torche et autres appareils similaires.

On a déjà proposé d'utiliser des colles à froid, notamment pour éviter le danger d'incendie, mais ces colles spéciales contiennent généralement des solvants, ce qui n'est pas désirable du point de vue de l'environnement. Aussi le résultat n'est-il pas toujours valable.

On connaît également des compositions auto-adhésives comprenant un copolymère linéaire tri-bloc styrène-butadiène-styrène et un copolymère di-bloc styrène-butadiène, cependant ces compositions nécessitent l'utilisation d'une huile de pétrole et les propriétés obtenues ne sont pas bonnes du point de vue TBA et résistance au fluage. La présence de l'huile peut en plus accroître le risque d'exsudation.

Il existe donc un besoin pour des compositions bitumineuses améliorées auto-adhésives à froid, qui présentent des propriétés améliorées du point de vue :
- collage rapide
- résistance au pelage
- une température bille et anneau élevée
- une bonne résistance au vieillissement
- de bonnes propriétés élastiques, même à basse température.

La présente invention a donc pour but une composition bitumineuse auto-adhésive à froid répondant aux critères énoncés ci-dessus.

La présente invention a pour objet une composition bitumineuse auto-adhésive à froid, qui comprend un mélange constitué de bitume, d'un mélange de différents polymères thermoplastiques et de résines tackifiantes, ainsi que les charges minérales habituelles et éventuellement des fibres et/ou des agents thixotropiques.

La présente invention a également pour objet des panneaux d'étanchéité, comprenant au moins une couche bitumineuse auto-adhésive à froid avec la composition de l'invention.

La présente invention a également pour objet un procédé pour préparer de tels panneaux d'étanchéité.

La composition bitumineuse auto-adhésive à froid de la présente invention est caractérisée en ce qu'elle comprend un mélange consistant en :
- 5 à 25% d'un mélange de polymères caoutchouteux de type styrène-diène comprenant au moins :
   - (A) un copolymère bloc linéaire styrène-butadiène choisi parmi les copolymères styrène-butadiène couplés de formule générale S-B-(c)-B-S où S représente le segment de polystyrène, B le segment de polybutadiène, (c) l'agent de couplage, et les copolymères styrène-butadiène-styrène sans agent de couplage;
   - (B) un copolymère bloc linéaire et/ou radial styrène-isoprène;
   - (C) un copolymère di-bloc styrène-diène, de préférence à charnière statistique ("à séquence statistique intermédiaire");
- 0 à 25% d'une ou plusieurs résines tackifiantes;
- 5 à 95% de bitume.

Cette composition bitumineuse contient également les charges minérales habituelles, les fibres minérales ou synthétiques ainsi que des agents thixotropiques. Il est connu que ces charges sont généralement utilisées à raison de O à 40 % basé sur le poids de composition bitumineuse.

On a maintenant trouvé d'une manière inattendue qu'une telle composition bitumineuse auto-adhésive à froid répondait non seulement à toutes les propriétés requises du point de vue adhésion à froid, vieillissement, température bille et anneau et élasticité à froid. De plus, la Demanderesse a trouvé que bien que des propriétés puissent être satisfaisantes, lorsque l'on met l'un ou l'autre polymère, on obtient des propriétés généralement améliorées lorsque les trois polymères sont présents. Ainsi, la composition bitumineuse de l'invention comprend, en plus des résines tackifiantes et du bitume qui seront décrits par après, un mélange de différents polymères (A), (B) et (C) décrits en détail ci-dessous.
1° Comme copolymère (A) on utilise de préférence un copolymère bloc linéaire styrène-butadiène ayant une teneur en styrène d'environ 28 à 77% en poids et un poids moléculaire total compris entre 70.000 et 160.000. Le copolymère (A) représente de préférence entre 45 et 85% en poids du mélange polymère et de préférence entre 65 et 75% en poids du mélange polymère.
   A titre d'exemple de copolymère linéaire approprié, on peut notamment citer les copolymères styrène-butadiène couplés de formule générale S-B-(c)-B-S où (c) représente l'agent de couplage et les copolymères styrène-butadiène-styrène sans agent de couplage.
2° Comme copolymère (B) on utilise de préférence un copolymère bloc linéaire et/ou radial styrène-isoprène dont la partie styrène représente de 10 à 40% en poids et de préférence de 10 à 20% et dont le poids moléculaire total est compris entre 60.000 et 400.000, de préférence entre 100.000 et 150.000.
   A titre d'exemple de copolymère linéaire et/ou radial approprié, on peut citer les styrène-isoprène couplés et les styrène-isoprènestyrène. Le copolymère (B) représente de préférence entre 5 et 45% en poids du mélange polymère et de préférence entre 5 et 25% en poids du mélange polymère.
3° Comme copolymère (C) on utilise de préférence un copolymère di-bloc styrène-diène, de préférence styrène-butadiène dont la partie styrène représente de 15 à 45% en poids et de préférence de 20 à 35% en poids et dont le poids moléculaire total est compris entre 50.000 et 150.000, de préférence entre 50.000 et 100.000. De préférence, le copolymère (C) utilisé dans la présente invention est à charnière statistique, c'est-à-dire qu'il contient un bloc styrénique et un bloc styrène-butadiène à répartition statistique. Généralement le bloc styrénique représente +/- 70% du styrène total.
   Ce copolymère (C) est utilisé à la fois comme compatibilisant et pour ses propriétés d'adhésivité. Le copolymère (C) représente de préférence environ de 10 à 40% en poids du mélange polymère et de préférence de 20 à 40% en poids.

Il est entendu que parmi les copolymères blocs styrènes-diènes conjugés appropriés pour la présente invention, on comprend également leurs dérivés partiellement ou totalement hydrogénés.

La composition bitumineuse de l'invention comprend également une ou plusieurs résines tackifiantes à raison de 0 à 25% en poids de la composition bitumineuse totale. Des quantités supérieures peuvent être utilisées mais au détriment de certaines propriétés. Le rôle des résines tackifiantes est bien connu de l'homme de l'art.
Les résines tackifiantes sont bien connues dans l'état de la technique et sont notamment décrites dans le brevet US 4738884.

Les bitumes utilisés dans la présente invention peuvent être les bitumes de distillation directe ou du bitume oxydé, du bitume naturel, du bitume de précipitation et autres connus de l'homme de l'art.
Il est aussi clair que différents bitumes peuvent être mélangés ainsi que modifiés par l'addition d'une ou plusieurs huiles.
En général les bitumes appropriés à la présente invention ont un indice de pénétration à 25°C au-dessous de 800 (0.1 mm) (norme ASTM D 5-73) et de préférence compris entre 30 et 400. On utilise de préférence des bitumes de distillation directe avec une préférence pour ceux qui ont un indice de pénétration compris entre 80 et 250.

La Demanderesse a trouvé de manière inattendue que la combinaison des trois copolymères (A), (B) et (C) permettait de préparer des compositions bitumineuses ayant des propriétés améliorées, et notamment l'adhésivité et le collage à froid tout en maintenant une bonne température de bille et anneau (TBA) et de bonnes propriétés d'élongation et d'élasticité à froid.

De fait, on a constaté que lorsque l'un ou l'autre des copolymètes (A), (B) et (C) n'étaient pas présents dans la formulation, on n'obtenait pas d'aussi bonnes propriétés.

La Demanderesse a également trouvé que selon un mode particulier d'exécution de la présente invention on pouvait également introduire avantageusement dans le mélange de polymères caoutchouteux un copolymère bloc radial styrène-butadiène.

Les copolymères blocs (A), (B) et (C) sont bien connus dans l'état de la technique. Ils sont généralement obtenus par polymérisation anionique dans un solvant, avec un catalyseur alkylmétallique comme les alkyllithium. Ils peuvent être préparés par polymérisation successive de styrène et de butadiène ou isoprène, lorsque les copolymères blocs linéaires sont en cause. Lorsque l'on se réfère aux copolymères blocs de structure radiale, il s'agit de copolymères pouvant comporter au moins trois branches, chacune des branches comprenant un bloc polystyrène et un bloc polybutadiène ou polyisoprène. Ce procédé est parfaitement décrit notamment dans le brevet US 3281383. Il est entendu que les copolymères décrits ci-dessus peuvent comporter des parties statistiques sans pour autant sortir du cadre de la présente invention.

Les copolymères ne doivent pas nécessairement avoir une composition symétrique.

La présente invention se rapporte également à des panneaux d'étanchéité qui comprennent au moins une couche auto-adhésive à froid conforme à celle décrite dans la présente invention, et éventuellement une ou plusieurs couches de bitume éventuellement modifié par des polymères et éventuellement additionné de charges minérales. Il est d'ailleurs tout à fait inattendu, et c'est un grand avantage des compositions de l'invention, de pouvoir constituer à elles seules l'intégralité du panneau d'étanchéité alors que dans les procédés antérieurs il fallait nécessairement utiliser d'autres couches afin de garantir les performances thermo-mécaniques (par ex. TBA) requises et notamment poser une couche comprenant du bitume éventuellement modifié avec un polymère caoutchouteux, et des charges minérales et autres agents thixotropiques, cette couche n'étant pas auto-adhésive. Il s'avère dès lors que la composition de l'invention présente un grand avantage sur l'état de la technique vu que non seulement elles ont des propriétés améliorées, mais techniquement elles peuvent être utilisées sous forme de feuilles à composition unique.

Il est entendu que les compositions bitumineuses auto-adhésives à froid de la présente invention peuvent également être utilisées dans d'autres applications comme les mastics, les émulsions ou autres éléments d'étanchéité bien connus de l'homme de l'art.

La présente invention est maintenant décrite à l'aide des exemples ci-après qui sont donnés à titre d'illustration et qui ne constituent en aucun cas une limitation.

### Exemples

Les compositions suivantes ont été préparées à l'aide d'un mélangeur labo à haut taux de cisaillement (type SILVERSON).
Le bitume de base a été chauffé dans un bain thermostatisé à l'huile jusqu'à une température de 180°C.
Les différents constituants caoutchouteux sont ensuite introduits ensemble avec la ou les résines tackifiantes. Une introduction de résines tackifiantes après dispersion des caoutchoucs a aussi été essayée, mais ne semble pas influencer les résultats.
La viscosité dynamique est mesurée avec un viscosimètre rotatif-système cône et plan de la société HAAKE. La viscosité indiquée correspond à un taux de cisaillement de 100 s⁻¹.
Pour les tests d'adhésion, on a dissout la composition bitumineuse dans la même quantité de toluène afin d'obtenir une pâte de bonne consistance pour pouvoir enduire, à l'aide d'une raclette, un film polyester avec une fine épaisseur constante de cette pâte. Ce film avait auparavant été dégraissé avec du toluène. Ensuite le toluène est évaporé dans un four à 50°C (1 heure). Ainsi, le film polyester a été couvert par une couche homogène et d'épaisseur constante (30 microns) de la composition bitumineuse.
Cette méthode est connue par l'homme de l'art, actif dans le secteur des adhésifs.
Des bandes d'une largeur de 25 mm sont découpées et appliquées - sous la force constante du poids d'un rouleau lourd - sur le support (dégraissé par le toluène) en inox.

Cette méthode de préparation des échantillons pour le test de pelage est très importante car elle garantit une bonne uniformité et une épaisseur de composition bitumineuse constante ainsi qu'une force d'application constante.
L'échantillon collé sur la plaque d'inox est ensuite conditionné pendant 24 heures à 23°C avant d'effectuer le test de pelage dans une machine de traction, avec une vitesse de traction de 300 mm/min.
La résine HERCOTAC 205 est commercialisée par la société HERCULES.
D'autres résines - de type hydrocarbure ou dérivé de rosine - ont été testées avec moins de succès.

| Exemples | TBA (ASTM D 36-66) | Résistance au pelage | POLYKEN TACK (ASTM D 2979-88) |
|---|---|---|---|
| | (°C) | (N/25 mm) | (g) |
| I. 75% NYNAS B 200 | | | |
| 5% SBS linéaire | | | |
| Mp = 120.000; TS = 30% | 83 | 20 | 650 |
| 10% SIS linéaire | | | |
| Mp = 135.000; TS = 15% | | | |
| 10% HERCOTAC 205 | | | |
| | | | |
| II. 75% NYNAS B 200 | | | |
| 10% SBS linéaire | | | |
| Mp = 120.000; TS = 30% | 92 | 23 | 750 |
| 3% SB dibloc | | | |
| Mp = 75.000; TS = 25% | | | |
| % styrène bloc = 17% | | | |
| 2% SIS linéaire | | | |
| Mp = 135.000; TS = 15% | | | |
| 10% HERCOTAC 205 | | | |

| Ex. | PEN à 25°C (ASTM D 5-65) | Viscosité dynamique à 180°C | Allongement à la rupture (ASTM D-412) | Pliage à froid (*) (DIN 52123) |
|---|---|---|---|---|
| | (0,1 mm) | (m Pa.s) | (%) | (°C) |
| I. | 65 | 1600 | 2600 | - 20 |
| | | | | |
| II. | 53 | 2250 | 3100 | - 25m |

| | | | | |
|---|---|---|---|---|
| (*) sur éprouvettes moulées par compression | | | | |

## Revendications

1. Composition bitumineuse auto-adhésive à froid caractérisée en ce qu'elle comprend un mélange consistant en :
- 5 à 25% d'un mélange de polymères caoutchouteux de type styrène-diène comprenant au moins:
- (A) un copolymère bloc linéaire styrène-butadiène choisi parmi les copolymères styrène-butadiène couplés de formule générale S-B-(c)-B-S où S représente le segment de polystyrène, B le segment de polybutadiène, (c) l'agent de couplage, et les copolymères styrène-butadiène-styrène sans agent de couplage;
- (B) un copolymère bloc linéaire et/ou radial styrène-isoprène;
- (C) un copolymère di-bloc styrène-diène;
- 0 à 25 % d'une ou plusieurs résines tackifiantes;
- 5 à 95 % de bitume.

2. Composition selon la revendication 1 caractérisée en ce que comme copolymère (A) on utilise un copolymère bloc linéaire styrène-butadiène ayant une teneur en styrène de 28 à 77% en poids et un poids moléculaire total compris entre 70.000 et 160.000

3. Composition selon l'une quelconque des revendications 1 à 2 caractérisée en ce que le copolymère (A) représente entre 45 et 85% en poids du mélange polymère et de préférence entre 65 et 75% en poids du mélange polymère.

4. Composition selon la revendication 1 caractérisée en ce que comme copolymère (B) on utilise un copolymère bloc linéaire et/ou radial styrène-isoprène dont la partie styrène représente de 10 à 40% en poids et de préférence de 10 à 20% et dont le poids moléculaire total est compris entre 60.000 et 400.000, de préférence entre 100.000 et 150.000.

5. Composition selon l'une quelconque des revendications 1 à 4 caractérisée en ce que le copolymère (B) représente entre 5 et 45% en poids du mélange polymère et de préférence entre 5 et 25% en poids du mélange polymère.

6. Composition selon la revendication 1 caractérisée en ce que comme copolymère (C) on utilise un copolymère di-bloc styrène-diène, de préférence styrène-butadiène, dont la partie styrène représente de 15 à 45% en poids et de préférence de 20 à 35% en poids et dont le poids moléculaire total est compris entre 50.000 et 150.000, de préférence entre 50.000 et 100.000.

7. Composition selon la revendication 6 caractérisée en ce que le copolymère (C) est à charnière statistique, c'est-à-dire qu'il contient un bloc styrénique et un bloc styrène-butadiène à répartition statistique.

8. Composition selon l'une quelconque des revendications 1 à 7 caractérisée en ce que le copolymère (C) représente de 10 à 40% en poids du mélange polymère et de préférence de 20 à 40% en poids.

9. Composition selon l'une quelconque des revendications 1 à 8 caractérisée en ce que le mélange de polymères caoutchouteux contient également un copolymère bloc radial styrène-butadiène.

10. Panneaux d'étanchéité comprenant au moins une couche d'une composition bitumineuse selon l'une quelconque des revendications 1 à 9.

## Patentansprüche

1. In der Kälte selbstklebende Bitumenzusammensetzung, dadurch gekennzeichnet, daß sie eine Mischung enthält, bestehend aus:
- 5 bis 25% einer Mischung von kautschukartigen Polymeren des Typs Styrol-Dien, welche mindestens enthält:
- (A) ein lineares Blockcopolymer Styrol-Butadien, ausgewählt aus den gekoppelten Copolymeren Styrol-Butadien der allgemeinen Formel S-B-(c)-B-S, wo S das Polystyrolsegment darstellt, B das Polybutadiensegment, (c) das Kopplungsmittel, und den Copolymeren Styrol-Butadien-Styrol ohne Kopplungsmittel,
- (B) ein lineares und/oder radiales Blockcopolymer Styrol-Isopren,
- (C) ein Diblockcopolymer Styrol-Dien,
- 0 bis 25% eines oder mehrerer klebrigmachender Harze,
- 5 bis 95% Bitumen.

2. Zusammensetzung nach Anspruch 1, dadurch gekennzeichnet, daß man als Copolymer (A) ein lineares Blockcopolymer Styrol-Butadien mit einem Gehalt an Styrol von 28 bis 77 Gew.% und einem Gesamtmolekulargewicht, das zwischen 70 000 und 160 000 enthalten ist, verwendet.

3. Zusammensezung nach einem der Ansprüche 1 bis 2, dadurch gekennzeichnet, daß das Copolymer (A) zwischen 45 und 85 Gew.% der Polymermischung und vorzugsweise zwischen 65 und 75 Gew.% der Polymermischung darstellt.

4. Zusammensetzung nach Anspruch 1, dadurch gekennzeichnet, daß man als Copolymer (B) ein lineares und/oder radiales Blockcopolymer Styrol-Isopren verwendet, dessen Styrolteil von 10 bis 40 Gew.% und vorzugsweise von 10 bis 20% darstellt, und dessen Gesamtmolekulargewicht zwischen 60 000 und 400 000, vorzugsweise zwischen 100 000 und 150 000 enthalten ist.

5. Zusammensetzung nach einem der Ansprüche 1 bis 4, dadurch gekennzeichnet, daß das Copolymer (B) zwischen 5 und 45 Gew.% der Polymermischung und bevorzugt zwischen 5 und 25 Gew.% der Polymermischung darstellt.

6. Zusammensetzung nach Anspruch 1, dadurch gekennzeichnet, daß man als Copoloymer (C) ein Styrol-Dien-Diblockcopolymer verwendet, vorzugsweise Styrol-Butadien, dessen Styrolteil von 15 bis 45 Gew.% und bevorzugt von 20 bis 35 Gew.% darstellt, und dessen Gesamtmolekulargewicht zwischen 50 000 und 150 000, vorzugsweise zwischen 50 000 und 100 000 enthalten ist.

7. Zusammensetzung nach Anspruch 6, dadurch gekennzeichnet, daß das Copolymer (C) in statistischer Verbindung ist, das heißt, daß es einen Styrolblock und einen Block Styrol-Butadien in statistischer Verteilung enthält.

8. Zusammensetzung nach einem der Ansprüche 1 bis 7 , dadurch gekennzeichnet, daß das Copolymer (C) von 10 bis 40 Gew.% der Polymermischung und bevorzugt von 20 bis 40 Gew.% darstellt.

9. Zusammensetzung nach einem der Ansprüche 1 bis 8, dadurch gekennzeichnet, daß die Mischung von kautschukartigen Polymeren ebenfalls ein radiales Blockcopolymer Styrol-Butadien enthält.

10. Platten von Dichtheit, welche mindestens eine Lage einer Bitumenzusammensetzung nach einem der Ansprüche 1 bis 9 enthalten.

## Claims

1. Cold self-adhesive bitumen composition of the present invention is characterised in that it comprises a mixture composed of:
- 5% to 25% of a mixture of styrene-diene rubber polymers comprising at least:
- (A) one styrene-butadiene linear block copolymer selected from coupled styrene-butadiene copolymers with the general formula S-B-(c)-B-S, where S represents the polystyrene segment, B the polybutadiene segment, (c) the coupling agent, and styrene-butadiene-styrene copolymers without coupling agent;
- (B) one styrene-isoprene linear and/or radial block copolymer;
- (C) one styrene-diene double-block copolymer;
- 0% to 25% of one or more tackifying resins;
- 5% to 95% of bitumen.

2. Composition according to Claim 1, characterised in that as copolymer (A) a styrene-butadiene linear block copolymer is used which has a styrene content of 28% to 77% by weight and a total molecular weight in the range of between 70 000 and 160 000.

3. Composition according to either of Claims 1 or 2, characterised in that the copolymer (A) constitutes between 45% and 85% by weight of the polymer mixture and preferably between 65% and 75% by weight of the polymer mixture.

4. Composition according to Claim 1, characterised in that as copolymer (B) a styrene-isoprene linear and/or radial block copolymer is used, the styrene component of which constitutes from 10% to 40% by weight and preferably from 10% to 20%, and its total molecular weight lies in the range of between 60 000 and 400 000, preferably between 100 000 and 150 000.

5. Composition according to any one of Claims 1 to 4, characterised in that the copolymer (B) constitutes between 5% and 45% by weight of the polymer mixture and preferably between 5% and 25% of the polymer mixture.

6. Composition according to Claim 1, characterised in that the copolymer used as (C) is a styrene-diene, preferably styrene-butadiene, double-block copolymer, the styrene component of which constitutes 15% to 45% by weight and preferably from 20% to 35% by weight, and its total molecular weight lies in the range of between 50 000 and 150 000, preferably between 50 000 and 100 000.

7. Composition according to Claim 6, characterised in that the copolymer (C) is a statistical link copolymer, i.e. it contains a statistically distributed styrene block and styrene-butadiene block.

8. Composition according to any one of Claims 1 to 7, characterised in that the copolymer (C) constitutes about 10% to 40% by weight of the polymer mixture and preferably from 20% to 40% by weight.

9. Composition according to any one of Claims 1 to 8, characterised in that the mixture of rubber polymers also contains a styrene-butadiene radial block copolymer.

10. Sealing panels comprising at least one layer of a bitumen composition according to any one of Claims 1 to 9.
